# EUROPEAN PATENT APPLICATION

(11) **EP 1 014 624 A1**
(43) Date of publication of application: **28.06.2000**
(21) Application number: 98124518.6
(22) Date of filing: 22.12.1998
(51) Int. Cl.: H04L 12/56, H04L 12/46, H04Q 7/38, H04Q 7/24, H04L 29/06, H04L 12/28

(54) **Multiple access communication system**

(71) Applicant: TELEFONAKTIEBOLAGET LM ERICSSON (publ), 126 25 Stockholm (SE)
(72) Inventor: Keller, Ralf, 52146 Wuerselen (DE); Lohmar, Thorsten, 52062 Aachen (DE); Niebert, Norbert, 52074 Aachen (DE)
(74) Representative: Mohsler, Gabriele

(57) **Abstract**

The invention relates to a multiple access communication system comprising an access node (QOS break). Said access node (QOS break) interfaces with a plurality of mobile user equipment (MT) and a logical node generates quality of service (QOS) specification for the mobile user equipment. A resource manager that handles said quality of service specification service and distributes at least one QOS constraint associated with said QOS specification and/or determines whether resources can be allocated to meet said QOS specification. Further the logical node generates a reservation information and the communication system includes at least two QOS areas that can communicate with each other and at least one QOS break between the two QOS areas.

## Description

The present invention relates to a multiple access communication system for efficiently serving high throughput requirements, low delay and delay variation, and more particularly the delivery of information with a high throughput e.g. video information to mobile user equipment.

Multiple access communication systems such as cellular telephone systems have grown in operations world-wide. Therefore solutions are required to meet increasing capacity needs of a rapidly growing number of users as well as to maintain high quality service.

Networks, which are based on an Internet Protocol (IP) are of special interest. The Internet Protocol is a Layer 3 Protocol, referring to the OSI Layer model. The Internet Protocol is based on packets with a length of maximal 64 kByte. Information of more than 64 kByte is a transfer by a plurality of packets. Each packet is a segment of the whole information and is transmitted via its own way through the network. As the Internet Protocol does not constitute a connection along which the packets are transported, it is necessary that each packet contains the source and target address. The correct sequence of the IP packets is achieved at the transport service of a higher layer.

A number of mechanisms exist today that deliver high bandwidth information such as video information or high quality voice information over networks which are based on the Internet Protocol.

One known mechanism is the mechanism of overprovisioning. More bandwidth is available in the network than actually used. This produces a fairly reasonable quality but requires high capacities.

A further method to deliver high bandwidth information over IP networks is achieved with IP switching, where the flow of the IP packets is observed, and the switching is initiated by observing the packet flow.

Another way of delivering high bandwidth information over IP networks is IP reservation as performed with the Resource Reservation Protocol (RSVP) or with the Ticket Signalling Protocol (TSP). RSVP supports real time services based on frequent reservation messages, which ensure resources along the travelled path. TSP addresses the problem of offering traffic contracts with a controlled quality of service (QOS) specification over a wide area connectionless network. Since connection identities cannot be stored in a connectionless network, the service differentiation is based on the use of priority bits in the IP header. The usage of high priority levels is controlled to avoid a misuse of high priority level marking.

Overprovisioning is not suitable for mobile and wireless networks, as spectrum will remain a scarce resource.

IP switching is based on statistical data and causes a problem at handover situations.

IP reservation is a preferred method in mobile environments. The RSVP standard, however, does not foresee high dynamic changes of the data stream as they occur in the mobile networks.

Therefore it is an object of the present invention to create a multiple access communication system, which efficiently transfers information to mobile user equipment. Moreover the system enables a part of the users to receive and/or send information with a high bandwidth. The invention also solves the problem of allocating different bandwidths to different users or different types of users.

This is advantageously achieved by the system according to claim 1 and by the method according to claim 7. Further advantageous use is achieved according to the claims 21 - 25.

According to the invention, the problem is solved by a multiple access communication system which comprises a processing system, an access node, wherein said access node interfaces with a plurality of mobile user equipment, wherein a logical node generates quality of service (QOS) specification for said clients, a resource manager that handles said QOS specification service and distributes at least one QOS constraint associated with said QOS specification and/or determines whether resources can be allocated to meet said QOS specification, wherein the logical node generates reservation information, wherein the communication system includes at least two QOS areas that can communicate with each other and at least one QOS break between the two QOS areas.

The invention makes use of the idea that QOS specification, which gives access to a certain guarantied bandwidth and/or to a temporarily available bandwidth and/or to a PDU time delay for a user, is located at a separate node.

The QOS specification is not limited to a certain method of defining values for communication. The invention includes QOS specification, which contains or addresses certain, pre-defined services, as well as a dynamic system in which service quality is adapted to the actual need of its elements.

The QOS specification is generated within a high bandwidth and/or high throughput part of the multiple access communication system. The logical node is situated within this part of the network. The logical node is preferably situated within a fixed part of the network, which has a high capacity.

The mobile user equipment is, for example, a mobile terminal such as a hand-held computer or a notebook computer, a mobile telephone or a mobile multimedia system. The user operates advantageously with different classes of services.

The fixed part and the mobile part of the communication system constitute different QOS areas. As the bandwidth within the fixed part, e.g. the core network, of the communication system is higher than in the mobile part, e.g. the Radio Access Network or the Air Interface, the requirements of the users can be matched differently. The QOS specification may therefore vary. As the mobile and fixed part of the communication system generate different QOS areas, at least one QOS break exists between them. The award QOS break includes every case in which the two QOS areas have different bandwidths. It is not necessary that the QOS break constitutes a certain, sharp step. This, however, is possible and is included in the invention.

A further object of the invention is to create a method for managing resources of a multiple access communication system which comprises the steps of generating quality of service (QOS) specification for clients, receiving said QOS specification, distributing at least one QOS constraint associated with said QOS specification, determining whether resources can be allocated to meet said QOS specification, generating reservation information, wherein at least two QOS areas communicate with each other and at least one QOS break between said two QOS areas and wherein the QOS specification and the reservation information are generated by a logical node.

Further advantageous implementations of the invention are achieved according to the claims 2 - 6 and 8 - 20.

In a preferred implementation of the communication system and the method, the mobile access system works with information, which is transported in packets. Packets transferred to or received from mobile user equipment do not need to contain a QOS specification. The QOS specification is used within the high bandwidth part of the communication system.

The Quality of Service specification gives information about the bandwidth, which can be allocated to a user. The QOS specification may be adopted according to the needs of communication. In certain applications, the QOS should be static. In other applications the QOS specification should allow data transfer with a bandwidth which varies between a minimum average bit rate and a maximum average bit rate. The logical node is constructed in a manner that allows the adaptation of the QOS specification in accordance with the needs of the operator of the communication system.

The access node gives the mobile user equipment access to a part of the communication system that has a high bandwidth, which is especially a fixed part of the communication system. It is preferable that the access node functions as a logical node. In this implementation the QOS specification is generated in a part which has a high bandwidth for communication as well as a short communication path towards the mobile user equipment.

In a further preferred embodiment of the invention the QOS break sends and/or receives reservation information.

This embodiment permits the communication system to allocate capacity efficiently to the users. For example, the reservation information is sent according to the QOS specification.

In an advantageous implementation of the communication system and the method, the QOS areas work at the same protocol level for negotiating and/or maintaining QOS specification.

In another, equally advantageous implementation of the communication system the QOS areas work at different protocol levels to negotiate and/or maintain the QOS specification.

Within a preferred embodiment of the communication system one of the QOS areas is constituted by an air interface and another QOS area is constituted by a fixed part of the communication system.

To implement the multiple access communication system with satellites it is recommendable to use ground stations, which constitute QOS breaks. For this version of the multiple access communication one of the QOS areas is constituted by a specific interface and another QOS area is constituted by an air interface. Thus, the extremely scarce resources for communication with the satellites are liberated as much as possible from a transmission of QOS specification.

As the invention allows an effective interconnection between various QOS areas it is in no way limited to a special implementation.

A preferable way of carrying out the invention is that said QOS break sends and/or receives reservation information.

The method according to the invention is also applicable in cellular networks in which the mobile user equipment move between different cells. In this case it is advantageous that the reservation message is handed over to a new serving controller during a handover and modified according to available communication resources of the new controller.

In the following the invention will be further described by means of examples and in accordance with the figures. The following figures show:
- Fig. 1: a functional schematic of communication layers and protocols in a mobile and fixed part of a communication system with same protocol and same layers,
- Fig. 2: a functional schematic of communication layers and protocols in a mobile and fixed part of a communication system with complementary protocols on the same layer in the mobile and fixed part of the communication system,
- Fig. 3: a functional schematic of communication layers and protocols in a mobile and fixed part of a communication system with different protocols on different, but neighbouring layers, and
- Fig. 4: a functional schematic of communication layers and protocols in a mobile and fixed part of a communication system with different protocols on different, not neighbouring layers.

While the following description is in the context of cellular communications systems involving mobile telephones and/or personal communication equipment, it will be understood by those skilled in the art that the present invention may be applied to other communications applications.

The present invention will now be described in conjunction with preferred protocols for communication. However, it is evident that the invention includes other protocols as well. The invention does not depend on the used protocols.

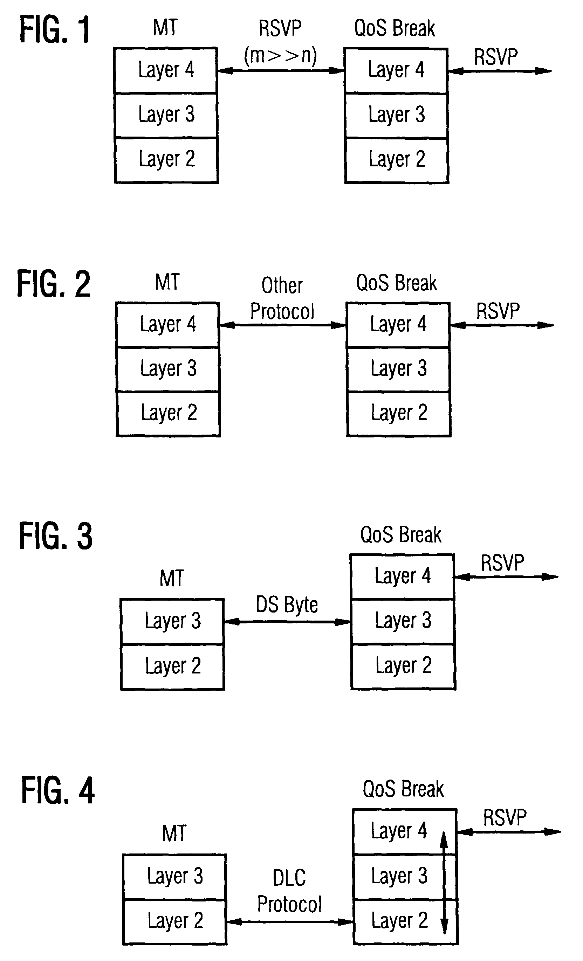

Fig. 1 to Fig. 4 show layers which are of special interest for interconnection.

The description explains the invention with layers as they are used in the Internet Protocol (IP) or in the Open System Interconnection (OSI) reference model as it has been proposed by the International Telecommunication Union (ITU). A division of the communication process in different layers is preferred for carrying out the invention. Examples of these layers are: physical layer, data link layer, network layer, transport layer, session layer, presentation layer and application layer. In the Internet Protocol the application layer is situated below the transport layer. However, the invention is not limited to a certain standard.

One advantageous example of the invention uses communication layers and protocols in a mobile, e.g. in a Radio Access Network and in a fixed part, e.g. in a Core network of a communication system with same protocol on a same layer, as it is schematically presented in Fig. 1.

The schematic of Fig. 1 shows a mobile terminal MT, which communicates wireless over a layer 4 with a QOS break. The QOS break is constituted by an access node for a fixed network. The fixed network operates with a protocol on the same layer as the mobile terminal. The Resource Reservation Protocol RSVP is used for wireless as well as wired communication.

As the mobile and the fixed part of the communication system do not have identical bandwidths, the access node constitutes a QOS break.

QOS specification is generated by the access node. The QOS specification or reservation information is transmitted after a certain time interval. This time interval is called renewal time interval. The renewal time interval is different between the mobile and the fixed part of the communication system. Within the mobile part, the renewal time interval is much longer than the renewal time limit in the fixed part.

Preferred renewal time intervals within the mobile part of network are one second to ten seconds.

Alternatively, QOS specification and/or reservation information is transmitted between the mobile terminal and the access node only in the case that parameters for the quality of service, like available and guarantied bandwidth or time delays of the PDU's, vary.

Another advantageous embodiment of the invention is shown according to Fig. 2 as a functional schematic of communication layers and protocols in a mobile and fixed part of a communication system with complementary protocols on a same layer in the mobile and fixed part of the communication system.

As in the aforementioned example, the mobile and the fixed part of the communication system do not have identical bandwidths and/or throughputs and the access node constitutes a QOS break.

QOS specification is generated by the access node. The QOS specification or reservation information is transmitted after a called renewal time interval. As in the aforementioned example, the renewal time interval is different between the mobile and the fixed part of the communication system. Within the mobile part, the renewal time interval is much longer than the renewal time limit in the fixed part.

The communication between the mobile terminal MT and the Quality of Service break QoS Break is carried out with another suited protocol.

Another advantageous embodiment of the invention is shown in Fig. 3 as a functional schematic of communication layers and protocols in a mobile and fixed part of a communication system with different protocols on different, but neighbouring layers, the so called peer layers.

In this implementation, information to set up and maintain a QOS context is transmitted through different layers. A QOS break is constituted by an access node for a fixed network. Within the mobile network layer 3 is used, whereas the QOS break uses layer 4 for signalling QOS information.

DS Bytes located in the IP header contain inner information to set up and maintain a QOS information which is in a context to QOS information which after the QOS break is transmitted by RSVP.

This implementation is especially advantageous when creating different service domains.

QOS specification is generated by the access node. The QOS specification or reservation information is transmitted after a renewal time interval. As in the aforementioned example, the renewal time interval is different between the mobile and the fixed part of the communication system. Within the mobile part the renewal time interval is much longer than the renewal time limit n in the fixed part.

The alternative solution, to transfer QOS specification and/or reservation information only in the case of changes of the parameters of the communication, may be realised with this implementation as well.

A further advantageous example of the invention is explained according to Fig. 4 as a functional schematic of communication layers and protocols in a mobile and fixed part of a communication system with different protocols on different, not neighbouring layers.

In this implementation layer 3 QOS requirements are derived from layer 2 QOS requirements. Thereby no specific protocol needs to be used on layer 3. This implementation is especially advantageous to a UMTS Terrestrial Radio Access Network (UTRAN) for accessing the Universal Mobile Telecommunication System (UMTS).

However, the other implementations of the invention are also suited for realising the Universal Mobile Telecommunication System.

UMTS contains in an advantageous realisation recognition of slots, especially time slots. This allows the allocation of local resources.

The invention allows mobile networks and UMTS, in particular, to provide communication with different, preferably high, bandwidths based on a suited protocol, especially a packet oriented protocol such as the Internet Protocol (IP). This protocol is mapped to lower layers. However, UMTS may also be realised with protocols working at different layers. The invention allows the realisation of a UMTS with flexible changes of quality of services at any layer of the communication. UMTS is especially suited for transmitting video and voice information. It is most advantageous that UMTS contains a Video-Over-IP or a Voice-Over-IP Communication on a mobile network.

A wireless LAN (WLAN) is preferable, realised according to the invention with a layer which is located above the DLC. DLC may be performed at a layer two. However, the layer two is only a symbol of different layers and may be constituted of many layers (sub-layers).

The WLAN can make use of the information stored within the QOS break, especially the access point. In this case the QOS break knows all resources and demands of the communication network.

A further advantageous implementation is to realise an Ethernet, for example, as is described in the standard IEEE 802.1P according to the invention. Within an advantageous implementation of the Ethernet, a terminal creates and/or sends at least one priority bit.

The invention is not limited to special layers for exchanging or negotiating QOS specification and/or reservation information. The invention is described according to known layers to allow those who are skilled in the art to implement the invention for multiple purposes. They would use other layers or sub-layers without difficulties.

Examples of sub-layers for layer 2 are Asynchronous Transfer Mode (ATM), Internet Protocol (IP), and PPP (point to point).

Examples of services, which are provided in the multiple access communication system are: background traffic, interactive traffic, real-time streaming and real-time conversation.

Preferably every class makes use of a different number of quality levels, for example three.

The background traffic, for example, may contain high-quality information like network management as well as low-quality information such as push channels which are provided over the internet.

Examples of the interactive traffic are the access of users to web sides. To allow the users quicker access to more relevant information such as text elements, it is preferable to assign these data a higher quality level than for other information which contains data of relatively lower relevance, such as pictures, for example.

Examples for real-time streaming are the download of audio or video files, especially non interactive Video over IP.

Real-time conversation, for example, includes conversation between users as it is carried out with voice or interactive video. Real-time conversation realises voice over IP or interactive Video over IP, in particular. For real-time conversation it is most advantageous to give different users different quality levels to guarantee that users with a higher priority obtain a higher bandwidth and/or a lower time delay.

The system allows a QOS provisioning within a fixed part of the network.

The invention further allows the implementation of a ranking of users. It is possible to allocate different service quality to different users or different types of users.

The invention permits the realisation of a service degradation as in the case of unavailable resources. In the case of congestion, high-end users receive precedence over low-end users. A static ranking as well as a dynamic ranking may be implemented. Moreover, it is possible that all application flows of the user are subject to this ranking.

Within a static ranking it is advantageous to introduce subscription classes. The number of classes might be defined by the network operator individually according to different subscription classes and charging models, for example, or in a standardised fashion.

The communication system may work with different classes of bit rates. It is advantageous to introduce different bit rates for different users or different types of users. Possible classes are applications, which do not require a precise specification for the bit rate such as the Short Messaging System (SMS) as well as several bit rates for higher valued services. Users may utilise different bit rates, for example, within a class 0: 64 kbit/s, class 1: 384 kbit/s, class 2: 2 Mbit/s, class 3: 25 Mbit/s.

It is advantageous to introduce different types of traffic classes, e.g. the initial class of an application or the temporary traffic class of an application, which could be modified according to a certain QOS specification.

The QOS specification allows the change of traffic class for user or certain applications.

One advantageous implementation of the invention includes a re-negotiation of services. The QOS specification may be adapted for example in the case of congestion, which leads to a service degradation, especially for low-end-users. However, a service upgrade, particularly at times with a low usage of the network can also be achieved.

The re-negotiation is advantageously performed by the logical node, especially the QOS break, thus avoiding that the information flow for the re-negotiation makes use of the limited bandwidth of the wireless part of the network.

The QOS break or the logical node stores QOS specification requested by the mobile terminals as well as a QOS specification, which is negotiated for performing the communication.

The QOS adaptation profile is most advantageous for a certain application, which has a minimum average bit rate and a maximum average bit rate.

It is possible to realise the principle of the invention with an RSVP-Protocol, which is an example of a known two-way protocol. Reservation messages are transferred not through the whole network but only between the QOS break within the fixed part of the network.

In contrast to conventional implementations of the RSVP-Protocol, path messages, which include traffic specification or quality of service specification are not transmitted through the entire path between the mobile terminal and a desired node within the wired pan of the network. Information is only transferred within the wired part of the network.

Within an integrated service model, a guaranteed load service may be as also maintained as a controlled load service.

One advantageous example of a guaranteed load service is voice-to-voice communication, whereas a controlled load service is more advantageous to applications in which the mobile user equipment of the network may communicate with transmission parameters which vary locally or temporally. The last-mentioned example is represented by a soft state and guarantees transmission parameters only at a statistical level.

## Claims

1. A multiple access communication system comprising
- a processing system,
- an access node,
- wherein said access node interfaces with a plurality of mobile user equipment,
- wherein a logical node generates quality of service (QOS) specification for mobile user equipment,
- a resource manager that handles said quality of service (QOS) specification service and distributes at least one quality of service (QOS) constraint associated with said quality of service (QOS) specification and/or determines whether resources can be allocated to meet said quality of service (QOS) specification,
- wherein the logical node generates reservation information,
- wherein the communication system includes at least two quality of service (QOS) areas that can communicate with each other and at least one quality of service (QOS) break between the two quality of service (QOS) areas.

2. The communication system according to claim 1,
wherein the access node functions as logical node.

3. The communication system according to claim 1 or 2, wherein the quality of service (QOS) break sends and/or receives reservation information.

4. The communication system according to any of the claims 1 to 3, wherein the quality of service (QOS) areas work at the same protocol level for negotiating and/or maintaining quality of service (QOS) specification.

5. The communication system according to any of the claims 1 to 3, wherein the quality of service (QOS) areas work at different protocol levels for negotiating and/or maintaining quality of service (QOS) specification.

6. The communication system according to any of the claims 1 to 7, wherein one of the quality of service areas is constituted by an air interface and another quality of service area is constituted by a fixed part of the communication system.

7. Method for managing the resources of a multiple access communication system comprising the steps of
- generating quality of service (QOS) specification for clients,
- receiving said quality of service (QOS) specification,
- distributing at least one quality of service constraint associated with said quality of service specification,
- determining whether resources can be allocated to meet said quality of service specification,
- generating reservation information,
- wherein at least two quality of service areas communicate with each other and at least one quality of service break between said two quality of service areas and
- wherein the quality of service specification and the reservation information are generated by a logical node.

8. The method according to claim 7, wherein said quality of service break sends and/or receives reservation information.

9. The method according to claim 7 or 8, wherein during a handover the reservation message is handed over to a new serving controller and modified according to available communication resources of the new controller.

10. The method according to any of the claims 7 to 9, wherein the quality of service areas work at the same protocol level for negotiating and maintaining quality of service.

11. The method according to claim 10, wherein the quality of service areas work at Layer 4.

12. The method according to claim 11, wherein the protocol is a Resource Reservation Protocol (RSVP).

13. The method according to claim 10, wherein the quality of service requirements are signalled on Layer 3.

14. The method according to claim 13, wherein DS-Bytes contain information to set up and/or maintain quality of service requirements

15. The method according to any of the claims 7 to 9, wherein the quality of service areas work at different protocol levels.

16. The method according to claim 15, wherein Layer 3 quality of service requirements are derived from Layer 2 quality of service requirements.

17. The method according to any of the claims 7 to 16, wherein quality of service (QOS) specification for mobile user equipment is transmitted after a renewal time interval which is longer than a renewal time interval in another quality of service area.

18. The method according to claim 17, wherein the renewal time interval within the mobile part of network lasts one second to ten seconds.

19. The method according to claim 17 or 18, wherein quality of service (QOS) specification for mobile user equipment is additionally transmitted in the case that communication parameters vary.

20. The method according to any of the claims 7 to 16, wherein quality of service (QOS) specification for mobile user equipment is only transmitted in the case that communication parameters vary.

21. Use of the method according to any of the claims 7 to 20, wherein the network works with own quality of service provisioning.

22. Use of the method according to any of the claims 7 to 20 in mobile networks.

23. Use of the method according to any of the claims 7 to 20, wherein voice communication is provided.

24. Use of the method according to any of the claims 7 to 20, wherein video communication is provided.

25. Use of the method according to any of the claims 7 to 20, wherein the communication is based on internet protocols.

26. Use according to claim 25, wherein the communication is voice over IP and/or video over IP.
